# EUROPEAN PATENT APPLICATION

(11) **EP 4 733 820 A1**
(43) Date of publication of application: **29.04.2026**
(21) Application number: 25211679.3
(22) Date of filing: 28.10.2025
(51) Int. Cl.: G02B 6/12

(54) **WAVEGUIDES WITH META-OPTICAL STRUCTURES FOR ROUTING LIGHT BETWEEN LAYERS**

(30) Priority: 28.10.2024 US 202463712953 P; 24.10.2025 US 202519368818
(71) Applicant: II-VI Delaware, Inc., Wilmington, DE 19890 (US)
(72) Inventor: CHEN, Young-Kai, Wilmington, 19890 (US); TATARCZAK, Anna, Wilmington, 19890 (US)
(74) Representative: Schmidt, Christian

(57) **Abstract**

Systems and methods are provided for waveguides structures with meta-optical structures for routing light between layers. An example method for manufacturing a waveguide structure with meta-optical structures for routing light may include fabricating a plurality of waveguide layers and adding one or more points of redirection where redirection of a light beam may occur. The points of redirection may be added by generating divots and adding meta-optical structures. The points of redirection may be interconnected via a high index optical material to efficiently route light between different waveguide layers and components. The points of redirection may also be configured to split or combine different polarizations of the light beam.

## Description

### CLAIM OF PRIORITY

This patent application claims priority to and claims benefit from United States Provisional Patent Application Serial No. 63/712,953, filed on October 28, 2024. The above identified application is hereby incorporated herein by reference in its entirety.

### TECHNICAL FIELD

Aspects of the present disclosure relate to optical communication related solutions. More specifically, certain implementations of the present disclosure relate to methods and systems for manufacturing and utilizing waveguides with meta-optical structures for routing light between layers.

### BACKGROUND

Limitations and disadvantages of conventional solutions for communication of optical signals, and in particular structures for handling such signals, will become apparent to one of skill in the art, through comparison of such systems with some aspects of the present disclosure as set forth in the remainder of the present application with reference to the drawings.

### BRIEF SUMMARY

System and methods are provided for waveguides with meta-optical structures for routing light between layers, substantially as shown in and/or described in connection with at least one of the figures, as set forth more completely in the claims.

These and other advantages, aspects and novel features of the present disclosure, as well as details of an illustrated embodiment thereof, will be more fully understood from the following description and drawings.

### BRIEF DESCRIPTION OF THE DRAWINGS

Fig. 1 illustrates an example waveguide structure for routing light between layers of a waveguide using meta-optical structures, in accordance with various example implementations of this disclosure.
Fig. 2 illustrates another example waveguide structure for routing light between layers of a waveguide using meta-optical structures, in accordance with various example implementations of this disclosure.
Fig. 3 illustrates an example process for manufacturing a waveguide structure for routing light between layers of a waveguide using meta-optical structures, in accordance with various example implementations of this disclosure.

### DETAILED DESCRIPTION

The present disclosure relates to the field of optical communications and waveguide technologies. In modern optical communication systems, such as copackaged optics (CPO) assemblies, the integration of photonic components with electronic chips is essential to meet the bandwidth and energy efficiency demands. A significant challenge is the efficient routing of light between different waveguide layers and components. Solutions based on the present disclosure offer higher efficiency compared to conventional solutions (e.g., grating couplers) for applications such as CPO assemblies and other advanced photonic systems. In addition to lower efficiency, current solutions (e.g., grating couplers) are also limited to handling only one polarization, which significantly limits flexibility.

In particular, solutions based on the present disclosure enable the manipulation of dual-polarized light, which overcomes limitations in existing systems. In this regard, in various implementations based on the present disclosure meta-optical structures may be used to control the propagation of light within multilayer waveguides. The meta-optical structures may comprise, e.g., nanostructures configured to manipulate light (e.g., by use of suitable patterning). Such meta-optical structure may be implemented in various materials, including, e.g., a thin silicon (Si) layer or composite multi-layers. For example, the meta-optical structures may be fabricated in a waveguide, and/or embedded therein (e.g., etched in the waveguide itself or in divots in the waveguide). Use of such meta-optical structures may enable higher efficiency while also allowing the manipulation of both polarization states. Additionally, meta-optical structures may be utilized in polarization splitters or multiplexers to allow the efficient coupling, splitting and combining of light across waveguides in various directions and polarization states. Accordingly, implementations based on the present disclosure provide systems and methods for utilizing meta-optical structures in waveguides to efficiently route, couple, split and manipulate light between layers and components.

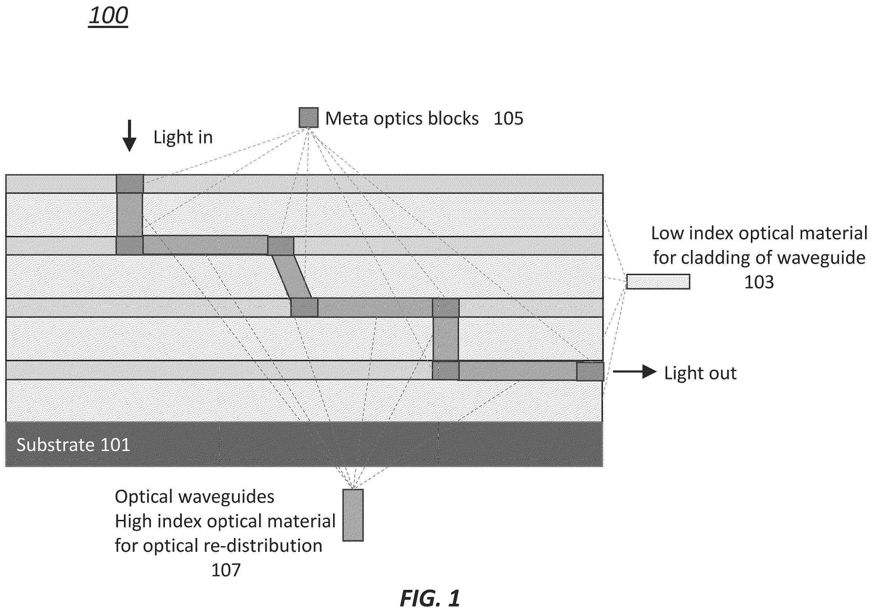

Example embodiments incorporating such waveguide structures, features and details relating thereto, and processes for manufacturing such structures, are described in more detail with respect to Figs. 1-3.

Fig. 1 illustrates an example waveguide structure for routing light between layers of a waveguide using meta-optical structures, in accordance with various example implementations of this disclosure.

Shown in Fig. 1 is waveguide structure 100. In this regard, the waveguide structure 100 comprises layers deposited on a substrate 101. These layers alternate between a low index optical material 103 and a high index optical material 107. The low index optical material 103 provides cladding within the waveguide structure 100. The high index optical material 107 provides optical paths for re-distribution. Meta-optical structures is added, as a plurality of meta optics blocks 105, at points where redirection of a light beam is desired. These points of redirection are interconnected via the high index optical material 107 to efficiently route light between different waveguide layers and components.

This disclosure also provides a method for manufacturing a waveguide structure 100 that is able to route light between layers using meta-optical structures 105. The meta-optical structures 105 may be embedded, integrated, and/or incorporated into etched-off parts (e.g., divots) of waveguide layers during fabrication, to allow for the redirection of light at 90° or any other angles (e.g., greater than 0° and less than 90°). The plurality of divots, filled with meta-optical structures 105, may be interconnected via a high index optical material 107.

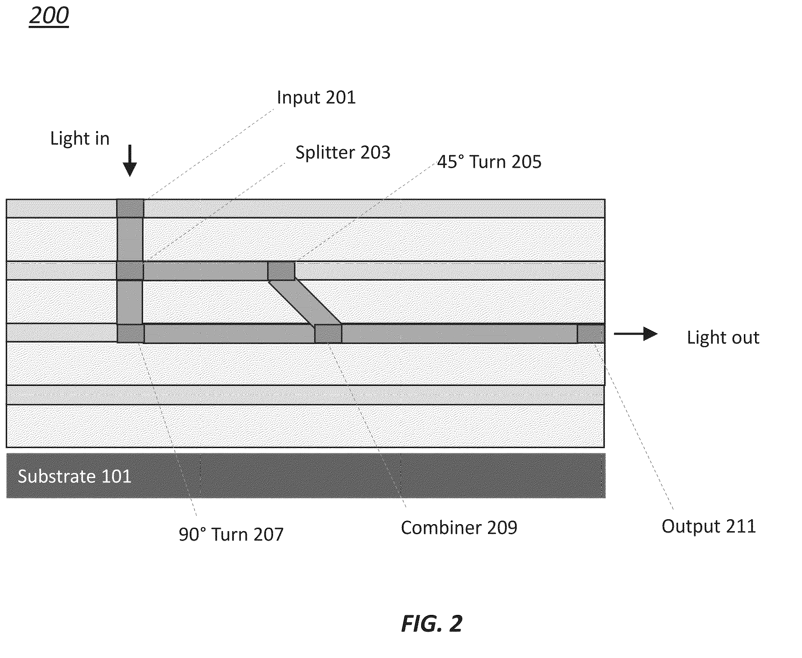

Fig. 2 illustrates another example waveguide structure for routing light between layers of a waveguide using meta-optical structures, in accordance with various example implementations of this disclosure.

Shown in Fig. 2 is waveguide structure 200. In this regard, the waveguide structure 200 is substantially similar to the waveguide structure 100 of Fig. 1, and may be manufactured and/or operate in a substantially similar manner. However, the waveguide structure 200 differs from waveguide structure 100 in that it incorporates points of redirection that may be configured for splitting incident light beams.

In this regard, the points of redirection (described above) may also be configured to couple an incident light beam at a desired input 201, split the light beam polarization at splitter 203, redirect one polarization of the light beam with a 45° turn 205, redirect another polarization of the light beam with a 90° turn 207, combine different polarizations with a combiner 209, and outcouple the combined light beam at output 211.

The meta-optical structures may be configured as a polarization splitter and/or a multiplexer. The meta-optical structures may comprise a meta-reflector and/or a transition adapter. The meta-optical structures may be configured to split polarizations of the light beam or combine polarizations of the light beam. The meta-optical structures may comprise thin silicon (Si) waveguides and polarization-independent SiN. Light may be coupled in any direction and with any polarization to provide more efficient coupling than conventional methods.

In various implementations, waveguide structures designed and/or implemented in accordance with the present disclosure may be configured for supporting polarization splitting and multiplexing. In this regard, the meta-optical structures used therein may be configured to refocus the light beam, change a polarization of the light beam, and/or adjust a diameter of the light beam. The meta-optical structures may comprise different optical properties for different polarizations of the light beam. A refractive index of the meta-optical structures may be different than a refractive index of the waveguide layer. Different refractive indices may facilitate enhanced light redirection and control. By handling both polarizations, implementations based on the present disclosure may enhance overall efficiency compared to traditional grating couplers, making it suitable for CPO assemblies and other photonic systems where compact and efficient light routing is required.

Implementations based on the present disclosure may also enable the use of polarization splitters or multiplexers with meta-reflectors and transition adapters. In this configuration, polarization-independent SiN or thin Si waveguides may be used for both polarizations. Meta-interfaces are then employed to split or combine the polarizations and transition them to lower or upper waveguide layers. This allows light to be coupled efficiently in any direction and with any polarization. Such an implementation dramatically improves the efficiency of optical coupling and routing within the waveguide structure.

Unlike conventional grating couplers, which are typically limited to handling single-polarized light, the meta-optical structures can operate with both polarizations. This feature is important for systems that require dual-polarization operation, improving overall system efficiency.

In various implementations, waveguide structures designed and/or implemented in accordance with the present disclosure may utilize meta-optical structures for light routing. In this regard, the meta-optical structures may be embedded, integrated, and/or incorporated into etched-off parts of and/or etched into the waveguide layers during fabrication. This enables precise light redirection between layers, including at 90° or other desired angles.

In various implementations, waveguide structures designed and/or implemented in accordance with the present disclosure may be configured for refocusing and beam shaping. In this regard, the meta-optical structures may refocus the light, adjust the beam diameter, and change the light's polarization, depending on the requirements of the application. This flexibility allows for better optical performance in tightly packed optical components, as is required in CPO assemblies.

In various implementations, waveguide structures designed and/or implemented in accordance with the present disclosure may be configured for refractive index control. In this regard, the refractive index of the meta-optical structures may be adjusted relative to the surrounding waveguide layers, which enhances the efficiency of light redirection and control without requiring additional optical components.

In various implementations, waveguide structures designed and/or implemented in accordance with the present disclosure may be configured for coupling in any direction and polarization. In this regard, the meta-optical structures enables light to be coupled efficiently in any direction and with any polarization, offering greater design flexibility and improved performance in optical communication systems.

In various implementations, waveguide structures designed and/or implemented in accordance with the present disclosure may be configured for edge coupling for light outcoupling. In this regard, the meta-optical structures may also be placed at the edges of the waveguide to outcouple light, allowing for efficient extraction of light from the waveguide structure.

Accordingly, implementations based on the present disclosure may offer a significant advancement in waveguide technology, particularly for CPO assemblies. By incorporating meta-optical structures, the waveguide structure achieves higher efficiency compared to traditional grating couplers and enables operation with dual polarization. The meta-optical structures may function as both a focusing element and an outcoupling lens, while also enabling polarization splitting and multiplexing. The ability to couple light in any direction and with any polarization further enhances the flexibility and performance of the system, making it highly suitable for advanced optical communication applications.

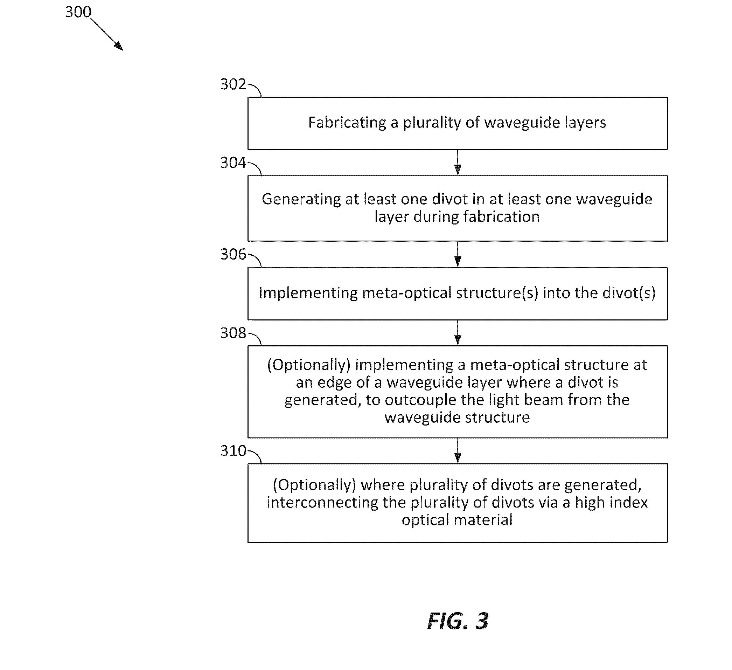

Fig. 3 illustrates an example process for manufacturing a waveguide structure for routing light between layers of a waveguide using meta-optical structures, in accordance with various example implementations of this disclosure.

Shown in Fig. 3 is a flow chart 300 comprising a plurality of example steps (blocks 302-310), which may be performed using a suitable system (machine or the like) to manufacture a waveguide structure for routing light between layers of a waveguide using meta-optical structures, as described herein.

In step 302, after an initial setup step (not shown) in which the system used in manufacturing the waveguide structure is powered on and configured (as necessary), a plurality of waveguide layers is fabricated.

In step 304, at least one divot is generated in at least one waveguide layer during fabrication. In this regard, generating a divot may comprise removing a portion of the waveguide layer via etching. In some instances, a plurality of divots may be generated in one or more waveguide layers during fabrication.

In step 306, meta-optical structures are implemented in the divots. In this regard, implementing the meta-optical structure into the divot may comprise embedding, integrating, and/or incorporating the meta-optical structure.

In step 308, (optionally) meta-optical structures may be fabricated or implemented (e.g., embedded, integrated, and/or incorporated) at an edge of a waveguide layer where a divot is generated, to outcouple the light beam from the waveguide structure.

In step 310, (optionally) where a plurality of divots is generated, the plurality of divots may be interconnected, such as via a high index optical material.

Accordingly, waveguide structures designed and/or implemented in accordance with the present disclosure may enable or support such functions as routing of light, splitting of light, and light manipulation (e.g., delay, interference (constructive/destructive), etc.). The splitting of light may be wavelength or polarization dependent. In this regard, wavelength splitting or energy splitting may be used for power monitoring, routing, and light manipulation. The waveguide structures described herein may be implemented in an optical or electro optical substrate. Multiple optical devices (e.g., lasers, modulators, photodiodes, optical fibers, etc.) may be placed on or embedded in the substrate. The waveguide structures described herein may be used for connecting these optical devices. The waveguide structures described herein may be utilized in various applications, including, e.g., optical substrate for XPU and memory chip connections, cameras, displays, AR/VR glass substrate/display, and the like.

An example method for manufacturing a waveguide structure, in accordance with the present disclosure, comprises fabricating a plurality of waveguide layers; generating a divot in a waveguide layer during fabrication; and implementing or fabricating a meta-optical structure into the divot, wherein the meta-optical structure is configured to redirect a light beam.

In an example embodiment, the meta-optical structure is configured to redirect light at 90 degrees.

In an example embodiment, the meta-optical structure is configured to redirect light at an angle of less than 90 degrees and greater than 0 degrees.

In an example embodiment, generating the divot comprises removing a portion of the waveguide layer via etching.

In an example embodiment, implementing the meta-optical structure into the divot comprises embedding, integrating, and/or incorporating the meta-optical structure .

In an example embodiment, the meta-optical structure is configured to refocus the light beam.

In an example embodiment, the meta-optical structure is configured to change a polarization of the light beam.

In an example embodiment, the meta-optical structure is configured to adjust a diameter of the light beam.

In an example embodiment, the meta-optical structure comprises different optical properties for different polarizations of the light beam.

In an example embodiment, a refractive index of the meta-optical structure is different than a refractive index of the waveguide layer.

In an example embodiment, wherein the method further comprises implementing a meta-optical structure at an edge of the waveguide layer to outcouple the light beam from the waveguide structure.

In an example embodiment, the meta-optical structure is configured as a polarization splitter.

In an example embodiment, the meta-optical structure is configured as a multiplexer.

In an example embodiment, the meta-optical structure comprises a meta-reflector.

In an example embodiment, the meta-optical structure comprises a transition adapter.

In an example embodiment, the meta-optical structure is configured to split polarizations of the light beam.

In an example embodiment, the meta-optical structure is configured to combine polarizations of the light beam.

In an example embodiment, the meta-optical structure comprises polarization-independent SiN.

In an example embodiment, the meta-optical structure comprises thin silicon waveguides.

In an example embodiment, the method further comprises generating a plurality of divots in one or more waveguide layers during fabrication; and implementing and/or fabricating meta-optical structures into the plurality of divots; and interconnecting the plurality of divots, filled with the meta-optical structures, via a high index optical material.

An example waveguide structure, in accordance with the present disclosure, comprises a plurality of waveguide layers; wherein at least one waveguide layer comprises a divot comprising meta-optical structure; and wherein the meta-optical structure is configured to redirect a light beam.

In an example embodiment, the meta-optical structure is configured to redirect light at 90 degrees.

In an example embodiment, the meta-optical structure is configured to redirect light at an angle of less than 90 degrees and greater than 0 degrees.

In an example embodiment, the divot is generated by removing a portion of the waveguide layer via etching.

In an example embodiment, implementing the meta-optical structure into the divot comprises embedding, integrating, and/or incorporating the meta-optical structure .

In an example embodiment, the meta-optical structure is configured to refocus the light beam.

In an example embodiment, the meta-optical structure is configured to change a polarization of the light beam.

In an example embodiment, the meta-optical structure is configured to adjust a diameter the light beam.

In an example embodiment, the meta-optical structure comprises different optical properties for different polarizations of the light beam.

In an example embodiment, a refractive index of the meta-optical structure is different than a refractive index of the waveguide layer.

In an example embodiment, a meta-optical structure is implemented at an edge of the waveguide layer to outcouple the light beam from the waveguide structure.

In an example embodiment, the meta-optical structure is configured as a polarization splitter.

In an example embodiment, the meta-optical structure is configured as a multiplexer.

In an example embodiment, the meta-optical structure comprises a meta-reflector.

In an example embodiment, the meta-optical structure comprises a transition adapter.

In an example embodiment, the meta-optical structure is configured to split polarizations of the light beam.

In an example embodiment, the meta-optical structure is configured to combine polarizations of the light beam.

In an example embodiment, the meta-optical structure comprises polarization-independent SiN.

In an example embodiment, the meta-optical structure comprises thin silicon waveguides.

In an example embodiment, the waveguide structure comprises a plurality of divots in one or more waveguide layers; wherein the plurality of divots comprises meta-optical structures; and wherein the plurality of divots are interconnected via a high index optical material.

Implementations as described herein may relate to the following: Systems and methods are provided for waveguides structures with meta-optical structures for routing light between layers. An example method for manufacturing a waveguide structure with meta-optical structures for routing light may include fabricating a plurality of waveguide layers and adding one or more points of redirection where redirection of a light beam may occur. The points of redirection may be added by generating divots and adding meta-optical structures. The points of redirection may be interconnected via a high index optical material to efficiently route light between different waveguide layers and components. The points of redirection may also be configured to split or combine different polarizations of the light beam.

The present application claims priority of US patent application 63/712,953 filed on October 28, 2024 and of US patent application 19/368,818 filed on October 24, 2025. The entire disclosure content of these applications is incorporated herein by reference for all purposes.

In the following, a set of items is disclosed. The items are numbered to facilitate referencing the features of one item in other items. The items form part of the present disclosure and could be made subject to independent and/or dependent claims irrespective of what currently is claimed in the application. We note, however, that the scope of protection is defined by the appended claims, where the following items do not constitute claims. The items are:
1. A method for manufacturing a waveguide structure, comprising:
   fabricating a plurality of waveguide layers;
   generating a divot in a waveguide layer during fabrication; and
   implementing a meta-optical structure into the divot, wherein the meta-optical structure is configured to redirect a light beam.
2. The method of item 1, wherein generating the divot comprises removing a portion of the waveguide layer via etching.
3. The method of item 1, wherein implementing the meta-optical structure into the divot comprises embedding, integrating, and/or incorporating the meta-optical structure.
4. The method of item 1, further comprising implementing a meta-optical structure at an edge of the waveguide layer to outcouple the light beam from the waveguide structure.
5. The method of item 1, wherein the method comprises:
   generating a plurality of divots in one or more waveguide layers during fabrication;
   implementing meta-optical structures into the plurality of divots; and
   interconnecting the plurality of divots, filled with the meta-optical structures, via a high index optical material.
6. A waveguide structure, comprising:
   a plurality of waveguide layers;
   wherein at least one waveguide layer comprises a divot comprising a meta-optical structure; and
   wherein the meta-optical structure is configured to redirect a light beam.
7. The waveguide structure of item 6, wherein the meta-optical structure is configured to redirect light at 90 degrees.
8. The waveguide structure of item 6, wherein the meta-optical structure is configured to redirect light at an angle of less than 90 degrees and greater than 0 degrees.
9. The waveguide structure of item 6, wherein the meta-optical structure is configured to refocus the light beam.
10. The waveguide structure of item 6, wherein the meta-optical structure is configured to change a polarization of the light beam.
11. The waveguide structure of item 6, wherein the meta-optical structure is configured to adjust a diameter the light beam.
12. The waveguide structure of item 6, wherein the meta-optical structure comprises different optical properties for different polarizations of the light beam.
13. The waveguide structure of item 6, wherein a refractive index of the meta-optical structure is different than a refractive index of the waveguide layer.
14. The waveguide structure of item 6, further comprising a meta-optical structure at an edge of the waveguide layer to outcouple the light beam from the waveguide structure.
15. The waveguide structure of item 6, wherein the meta-optical structure is configured as a polarization splitter.
16. The waveguide structure of item 6, wherein the meta-optical structure is configured as a multiplexer.
17. The waveguide structure of item 6, wherein the meta-optical structure comprises a meta-reflector.
18. The waveguide structure of item 6, wherein the meta-optical structure comprises a transition adapter.
19. The waveguide structure of item 6, wherein the meta-optical structure is configured to split polarizations of the light beam.
20. The waveguide structure of item 6, wherein the meta-optical structure is configured to combine polarizations of the light beam.
21. The waveguide structure of item 6, wherein the meta-optical structure comprises polarization-independent SiN.
22. The waveguide structure of item 6, wherein the meta-optical structure comprises thin silicon waveguides.
23. The waveguide structure of item 6, wherein the waveguide structure comprises a plurality of divots in one or more waveguide layers; wherein the plurality of divots comprises meta-optical structures; and wherein the plurality of divots are interconnected via a high index optical material.

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various embodiments in accordance with the present invention may be realized in hardware, software, or a combination of hardware and software. The present invention may be realized in a centralized fashion in at least one computing system, or in a distributed fashion where different elements are spread across several interconnected computing systems. Any kind of computing system or other apparatus adapted for carrying out the methods described herein is suited. A typical implementation may comprise one or more application specific integrated circuit (ASIC), one or more field programmable gate array (FPGA), and/or one or more processor (e.g., x86, x64, ARM, PIC, and/or any other suitable processor architecture) and associated supporting circuitry (e.g., storage, DRAM, FLASH, bus interface circuits, etc.). Each discrete ASIC, FPGA, Processor, or other circuit may be referred to as "chip," and multiple such circuits may be referred to as a "chipset." Another implementation may comprise a non-transitory machine-readable (e.g., computer readable) medium (e.g., FLASH drive, optical disk, magnetic storage disk, or the like) having stored thereon one or more lines of code that, when executed by a machine, cause the machine to perform processes as described in this disclosure. Another implementation may comprise a non-transitory machine-readable (e.g., computer readable) medium (e.g., FLASH drive, optical disk, magnetic storage disk, or the like) having stored thereon one or more lines of code that, when executed by a machine, cause the machine to be configured (e.g., to load software and/or firmware into its circuits) to operate as a system described in this disclosure.

Various embodiments in accordance with the present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present methods and/or systems have been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present methods and/or systems are not limited to the particular implementations disclosed, but that the present method and/or system will include all implementations falling within the scope of the appended claims.

## Claims

1. A method for manufacturing a waveguide structure, comprising:
fabricating a plurality of waveguide layers;
generating a divot in a waveguide layer during fabrication; and
implementing a meta-optical structure into the divot, wherein the meta-optical structure is configured to redirect a light beam.

2. The method of claim 1, wherein generating the divot comprises removing a portion of the waveguide layer via etching.

3. The method of claim 1 or 2, wherein implementing the meta-optical structure into the divot comprises embedding, integrating, and/or incorporating the meta-optical structure.

4. The method of any one of claims 1 to 3, further comprising implementing a meta-optical structure at an edge of the waveguide layer to outcouple the light beam from the waveguide structure.

5. The method of any one of claims 1 to 4, wherein the method comprises:
generating a plurality of divots in one or more waveguide layers during fabrication;
implementing meta-optical structures into the plurality of divots; and
interconnecting the plurality of divots, filled with the meta-optical structures, via a high index optical material.

6. A waveguide structure, comprising:
a plurality of waveguide layers;
wherein at least one waveguide layer comprises a divot comprising a meta-optical structure; and
wherein the meta-optical structure is configured to redirect a light beam.

7. The waveguide structure of claim 6, wherein the meta-optical structure is configured to redirect light at 90 degrees.

8. The waveguide structure of claim 6 or 7, wherein the meta-optical structure is configured to redirect light at an angle of less than 90 degrees and greater than 0 degrees.

9. The waveguide structure of any one of claims 6 to 8, wherein
a) the meta-optical structure is configured to refocus the light beam, and/or wherein
b) the meta-optical structure is configured to change a polarization of the light beam, and/or wherein
c) the meta-optical structure is configured to adjust a diameter the light beam, and/or wherein
d) a refractive index of the meta-optical structure is different than a refractive index of the waveguide layer, and/or wherein
e) the meta-optical structure is configured as a multiplexer, and/or wherein
f) the meta-optical structure comprises a meta-reflector, and/or wherein
g) the meta-optical structure is configured to split polarizations of the light beam, and/or wherein
h) the meta-optical structure comprises thin silicon waveguides, and/or wherein
i) the waveguide structure comprises a plurality of divots in one or more waveguide layers; wherein the plurality of divots comprises meta-optical structures; and wherein the plurality of divots are interconnected via a high index optical material.

10. The waveguide structure of any one of claims 6 to 9, wherein the meta-optical structure comprises different optical properties for different polarizations of the light beam.

11. The waveguide structure of any one of claims 6 to 10, further comprising a meta-optical structure at an edge of the waveguide layer to outcouple the light beam from the waveguide structure.

12. The waveguide structure of any one of claims 6 to 11, wherein the meta-optical structure is configured as a polarization splitter.

13. The waveguide structure of any one of claims 6 to 12, wherein the meta-optical structure comprises a transition adapter.

14. The waveguide structure of any one of claims 6 to 13, wherein the meta-optical structure is configured to combine polarizations of the light beam.

15. The waveguide structure of any one of claims 6 to 14, wherein the meta-optical structure comprises polarization-independent SiN.
